# FASCICULE DE BREVET EUROPEEN

(11) **EP 2 938 413 B1**
(45) Date de publication et mention de la délivrance du brevet: **11.11.2020**
(21) Numéro de dépôt: 13744722.3
(22) Date de dépôt: 10.07.2013
(51) Int. Cl.: B01D 3/14, F25J 3/02, F25J 3/06, F25J 5/00

(54) **PROCÉDÉ ET APPAREIL DE PURIFICATION D'UN MÉLANGE RICHE EN DIOXYDE DE CARBONE À BASSE TEMPÉRATURE**
VERFAHREN UND VORRICHTUNG ZUR REINIGUNG EINER KOHLENDIOXIDREICHEN MISCHUNG BEI NIEDRIGER TEMPERATUR
METHOD AND APPARATUS FOR PURIFYING A CARBON DIOXIDE-RICH MIXTURE AT A LOW TEMPERATURE

(30) Priorité: 13.07.2012 FR 1256778
(43) Date de publication de la demande: 04.11.2015
(73) Titulaire: L'Air Liquide Société Anonyme pour l'Etude et l'Exploitation des Procédés Georges Claude, 75007 Paris (FR)
(72) Inventeur: BRIGLIA, Alain, F-49140 Corze (FR); DARDE, Arthur, F-75005 Paris (FR)
(74) Mandataire: Mercey, Fiona Susan
(86) Numéro de dépôt international: PCT/FR2013/051649
(87) Numéro de publication internationale: WO 2014/009658

(56) Documents cités:
- WO-A1-2011/089383
- WO-A1-2012/030223
- FR-A1- 2 967 485
- US-A- 3 614 872
- US-A1- 2009 013 868
- US-A1- 2010 326 134

## Description

La présente invention est relative à un procédé et à un appareil de purification d'un mélange riche en dioxyde de carbone à basse température.

Une température basse est en dessous de 0°C, de préférence en dessous de -40°C.

Un mélange riche en dioxyde de carbone contient au moins 60% mol. de dioxyde de carbone, voire au moins 80% mol. de dioxyde de carbone.

Le reste du mélange peut contenir un ou plusieurs des composants suivants : de l'oxygène, de l'azote, de l'argon, de l'oxyde d'azote (NO, NO₂ ou N₂O), du monoxyde de carbone, de l'hydrogène, du mercure.

La purification peut être réalisée par une ou plusieurs étapes successives de condensation partielle et/ou par distillation.

US-A-2010/0326134 décrit un procédé et un appareil selon les préambules des revendications 1 et 12 respectivement. WO-A-2012/030223 décrit un procédé et un appareil selon les préambules des revendications 1 et 12 respectivement sauf qu'il ne mentionne pas la technologie utilisée pour le premier échangeur de chaleur.

Dans l'état de l'art, le procédé utilisé pour purifier du CO₂ en grande quantité consiste à refroidir le mélange gazeux riche en CO₂ jusqu'à la température la plus proche possible du gel du CO₂ (-56,5°C) afin de condenser le maximum de CO₂. Le froid est apporté en général par la vaporisation du CO₂ récupéré et le réchauffage des différents fluides, par exemple le CO₂ vaporisé, les gaz incondensables, ou des recyclages divers. Une intégration thermique poussée permet de réduire la consommation énergétique du procédé. Ainsi, les échangeurs à plaques en aluminium brasé sont particulièrement bien adaptés pour refroidir le mélange gazeux riche en CO₂ car ils permettent des échanges thermiques entre de nombreux fluides (6 est un chiffre courant) avec un faible écart de température entre les fluides chauds et les fluides froids (une approche de 2°C est une pratique courant aussi).

La température la plus froide de l'échange est fournie par la vaporisation de CO₂ proche du point triple. Cette vaporisation présente ainsi le risque de faire apparaître une phase de CO₂ solide si la pression chute à la valeur du point triple. En effet, en deçà de la pression du point triple (5,185 bars a), le CO₂ liquide ne peut exister et il se transforme alors en une phase solide (pour environ 60% des molécules) et une phase gazeuse. La vaporisation du liquide fournit le froid nécessaire pour solidifier le reste.

Cette phase solide, qui peut apparaître à l'occasion d'une fluctuation de la pression du gaz vaporisé, par exemple si le compresseur qui le récupère aspire plus de molécules qu'il n'en est vaporisé dans l'échangeur, peut boucher l'échangeur et l'endommager lors des phases de réchauffage. C'est une limitation pour l'utilisation d'un échangeur en aluminium brasé.

Il y a plusieurs façons pour réduire le risque d'endommager l'unité :
1. Opérer à plus haute pression, c'est-à-dire réchauffer le bout froid, et donc condenser moins de CO₂ dans le CPU. Cela va augmenter le coût énergétique du CO₂.
2. Elever la position du pot d'alimentation en liquide au dessus de l'échangeur, de manière à s'assurer que la pression du liquide dans l'échangeur soit toujours supérieure à la pression du liquide dans le pot grâce à la hauteur hydrostatique et donc qu'il ne peut se former de solide dans l'échangeur. Cette solution, plus élégante car elle évite dans presque tous les cas la formation de solide dans l'échangeur (ce que ne permet pas le point 1), dégrade tout de même l'efficacité énergétique car la vaporisation de CO₂ va s'effectuer à plus haute pression (la hauteur hydrostatique) et donc plus haute température.

L'invention proposée ici vise à permettre d'opérer au plus proche du point triple, voire même avec le CO₂ liquide au point triple.

Selon un objet de l'invention, il est prévu un procédé selon la revendication 1.

Selon d'autres aspects facultatifs :
- le gaz riche en dioxyde de carbone est comprimé et condensé pour former un liquide riche en dioxyde de carbone qui est un produit final du procédé.
- le liquide du premier séparateur de phases est détendu et envoyé à un deuxième séparateur de phases.
- le liquide condensé est envoyé à un (au) deuxième séparateur de phases.
- le liquide du deuxième séparateur de phases est détendu et est envoyé en tête d'une colonne de distillation où s'effectue la distillation, pour alimenter la colonne de distillation.
- le gaz du deuxième séparateur de phases se réchauffe dans le premier échangeur.
- le liquide du premier séparateur de phases est détendu et envoyé en tête d'une colonne de distillation où s'effectue la distillation, pour alimenter la colonne de distillation.
- le mélange refroidi se condense au moins partiellement dans le premier échangeur et est envoyé à un premier séparateur de phases, le liquide du premier séparateur de phases étant détendu et envoyé à un deuxième séparateur de phases, le gaz du premier séparateur de phases est envoyé au deuxième échangeur où il se condense pour former du liquide condensé, le liquide condensé est envoyé au deuxième séparateur de phases et le liquide du deuxième séparateur de phases est envoyé en tête de la colonne de distillation pour alimenter la colonne de distillation
- un deuxième liquide riche en dioxyde de carbone est produit par l'étape de purification et envoyé au premier échangeur sans passer par le deuxième échangeur et de préférence sans avoir été détendu, ce deuxième liquide se vaporise dans le premier échangeur pour former un gaz riche en dioxyde de carbone.
- un liquide de purge du deuxième échangeur est vaporisé pour fournir des frigories au procédé.
- le liquide riche en dioxyde de carbone est envoyé au deuxième échangeur après détente à une pression correspondant à celle du point triple du dioxyde de carbone et à une température égale à son point triple.
- la densité de la phase liquide riche en dioxyde de carbone utilisé dans le deuxième échangeur pour refroidir le mélange gazeux riche en dioxyde de carbone est comprise entre 1171 kg/m³ et 1562 kg/m³.

Selon un autre objet de l'invention, il est prévu un appareil selon la revendication 12.

Il peut y avoir des moyens pour envoyer un liquide du premier et/ou d'un deuxième séparateur de phases à la colonne de distillation.

Selon d'autres objets facultatifs, l'appareil comprend :
- un compresseur pour comprimer le gaz riche en dioxyde de carbone et un refroidisseur pour condenseur le gaz comprimé pour former un liquide riche en dioxyde de carbone qui est un produit final du procédé.
- un deuxième séparateur de phases, des moyens pour détendre le liquide du premier séparateur de phases et pour l'envoyer au deuxième séparateur de phases, des moyens pour envoyer le gaz du premier séparateur de phases au deuxième échangeur où il se condense pour former du liquide condensé, des moyens pour envoyer le liquide condensé au deuxième séparateur de phases et des moyens pour envoyer le liquide du deuxième séparateur de phases en tête de la colonne de distillation pour alimenter la colonne de distillation.
- une conduite pour envoyer le gaz du deuxième séparateur de phases se réchauffer dans le premier échangeur.
- des moyens pour envoyer un deuxième liquide riche en dioxyde de carbone produit par l'étape de purification au premier échangeur sans passer par le deuxième échangeur et de préférence sans avoir été détendu,
- des moyens pour envoyer un liquide de purge du deuxième échangeur se vaporiser dans un échangeur pour fournir des frigories au procédé.

Le principe selon l'invention est de revenir à un échangeur permettant un échange de chaleur indirect entre seulement deux fluides, qui est un échangeur « tubes-calandre » où le CO₂ se vaporise dans la calandre et le flux à condenser partiellement se trouve dans les tubes. Le liquide bouillant se trouvant dans une calandre, il n'est plus à craindre que l'apparition d'une phase solide bouche les passages et conduise à des surpressions locales lorsque du solide se sublime entre deux bouchons de glace.

Il est donc possible d'opérer le pot à la pression du point triple pour le liquide bouillant, le CO₂ solide qui apparaît ponctuellement fondra lorsque la pression remontera au-dessus du point triple ou lorsque le liquide alimentant l'échangeur sera un peu surchauffé.

Les impuretés éventuellement présentes dans le CO₂ liquide vaporisé seront évacuées de l'échangeur :
- Soit dans la phase gazeuse pour les plus légères.
- Soit dans une purge liquide pour les plus lourdes.

Cette purge liquide sera évacuée de l'échangeur.

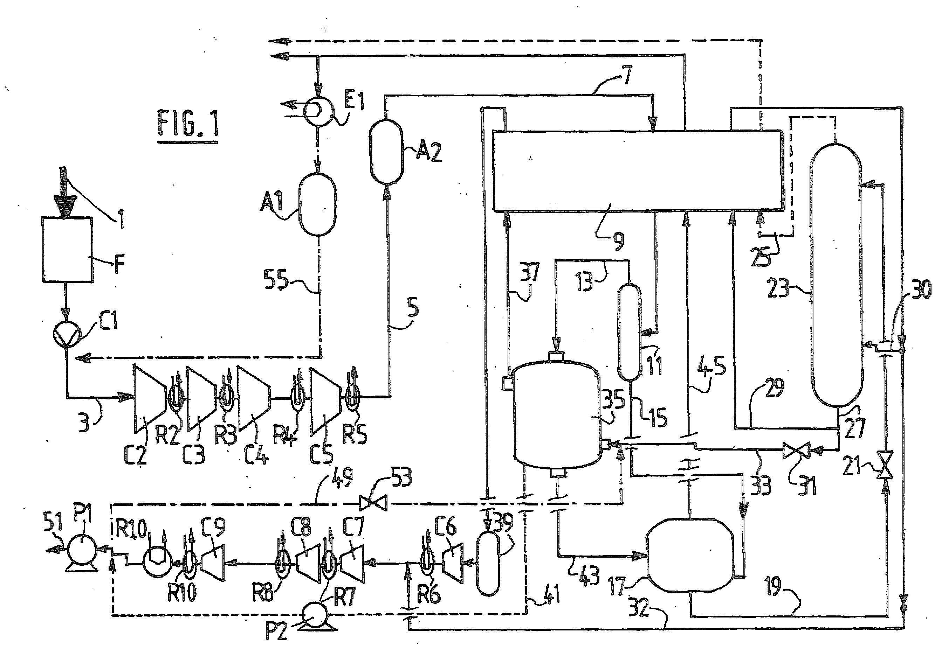

L'invention sera décrite en plus détail en se référant aux figures 1 à 4 qui représentent des procédés selon l'invention.

Dans la Figure 1, un mélange 1 contenant au moins 60% mol. de dioxyde de carbone, voire au moins 80% mol. de dioxyde de carbone.

Le reste du mélange 1 peut contenir un ou plusieurs des composants suivants : de l'oxygène, de l'azote, de l'argon, de l'oxyde d'azote (NO, NO₂ ou N₂O), du monoxyde de carbone, de l'hydrogène.

Le mélange est filtré dans un filtre F pour enlever les poussières puis comprimé dans un premier étage de compresseur C1 pour former un débit comprimé 3. Le débit comprimé 3 est comprimé dans un deuxième étage de compression C2, refroidi dans un refroidisseur R2, comprimé dans un troisième étage de compression C3, refroidi dans un refroidisseur R3, comprimé dans un quatrième étage de compression C4, refroidi dans un refroidisseur R4, comprimé dans un cinquième étage de compression C5 et refroidi dans un refroidisseur R5 pour former un débit 5 à entre 6 et 20 bars abs. Ce débit du mélange 5 est épuré en eau dans un lit d'absorbant A2 pour former un débit épuré 7. Le débit épuré 7 est partiellement condensé dans un premier échangeur 9, qui est un échangeur en aluminium constitué par un empilement de tapis d'ondes séparé par des plaques. Le débit partiellement condensé est envoyé dans un premier séparateur de phases 11. Le gaz formé 13 est envoyé aux tubes d'un deuxième échangeur 35, permettant un échange indirect de chaleur entre seulement deux fluides, du type tubes et calandre. La figure n'illustre pas la multiplicité de tubes où se condense le gaz 13 dérivé du mélange. Le liquide formé 43 est envoyé à un deuxième séparateur de phases 17, où est envoyé également le liquide 15 du premier séparateur de phases 11.

Un gaz 45 du deuxième séparateur de phases 17 se réchauffe dans le premier échangeur de chaleur. Le liquide 19 du deuxième séparateur 17 est détendu dans une vanne 21 et envoyé en tête de la colonne de distillation 23.

Un gaz de tête 25 appauvri en dioxyde de carbone mais enrichi en au moins une des impuretés (de l'oxygène, de l'azote, de l'argon, de l'oxyde d'azote (NO, NO₂ ou N₂O), du monoxyde de carbone, de l'hydrogène) se réchauffe dans le premier échangeur de chaleur 9.

Un liquide de cuve 27 est soutiré en cuve de la colonne et contient au moins 80% mol de dioxyde de carbone. Le liquide 27 est divisé en deux, un débit 29 se vaporise dans le premier échangeur de chaleur 9 sans avoir été détendu. Une partie 30 du gaz formé est envoyée en cuve de la colonne de distillation. Le reste 32 fait partie du produit du procédé.

Le liquide 33 provenant de la cuve est détendu dans une vanne 31 jusqu'à une pression équivalente au point triple du dioxyde de carbone qu'il contient. Le liquide est ensuite envoyé à la calandre du deuxième échangeur 35 où il se vaporise partiellement. Le gaz 37 formé est réchauffé dans le premier échangeur 9 et envoyé à une capacité intermédiaire pour absorber les variations de pression 39. De là il est comprimé par un étage de compression C6 et refroidi dans un refroidisseur R6 avant d'être mélangé avec le liquide vaporisé 32. Le gaz ainsi formé est comprimé par les étages C7, C8, C9 et refroidi par les refroidisseurs R7, R8, R9, R10 afin de former un gaz condensé. Ce gaz condensé est mélangé avec la purge liquide 41 du deuxième échangeur et en partie pompé par une pompe P1 pour former un produit liquide sous pression 51, à au moins 50 bars. La purge liquide 41 a précédemment été pompée dans une pompe P2. Une partie 49 du liquide sert de liquide de cycle, est détendu au point triple dans la vanne 53 et envoyé au deuxième échangeur 35, mélangé avec le débit 33.

Une partie du gaz 45 est réchauffé dans un échangeur E1 et sert à régénérer le lit d'adsorbant A1 qui est en régénération. Le débit 55 ayant servi à la régénération est mélange avec le débit 3 en aval de l'étage C1.

Le liquide de purge 41 est pompé par la pompe P2 jusqu'à la pression où le reste du CO₂ est condensé (contre de l'air ou de l'eau dans le refroidisseur R10) vers 80 bars a) afin d'y être mélangée.

Un inconvénient est que ce liquide froid représente une importante perte thermique pour la boite froide, l'avantage est que ce fluide ne transitant pas par le compresseur de produit, ce dernier est de taille réduite

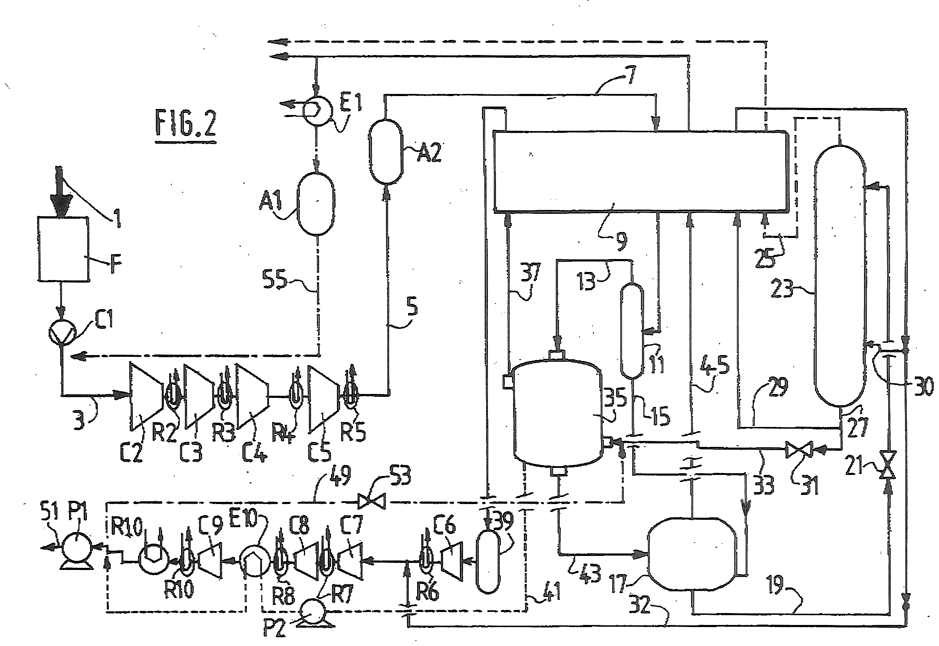

Il est possible de réchauffer le liquide 41 ainsi pompé dans la pompe P2 avant de le mélanger avec le CO₂ liquide à température ambiante afin de récupérer les frigories de la chaleur sensible de la purge, par exemple pour réduire l'énergie de compression du CO₂ produit via l'échangeur 9 dans la Figure 2.

Ainsi le liquide pompé sert de fluide frigorigène dans un refroidisseur E10 entre le refroidisseur R8 et l'étage de compression C9.

Une autre variante va produire de l'eau glacée dans l'échangeur E10 ou toute autre valorisation envisageable de ce froid

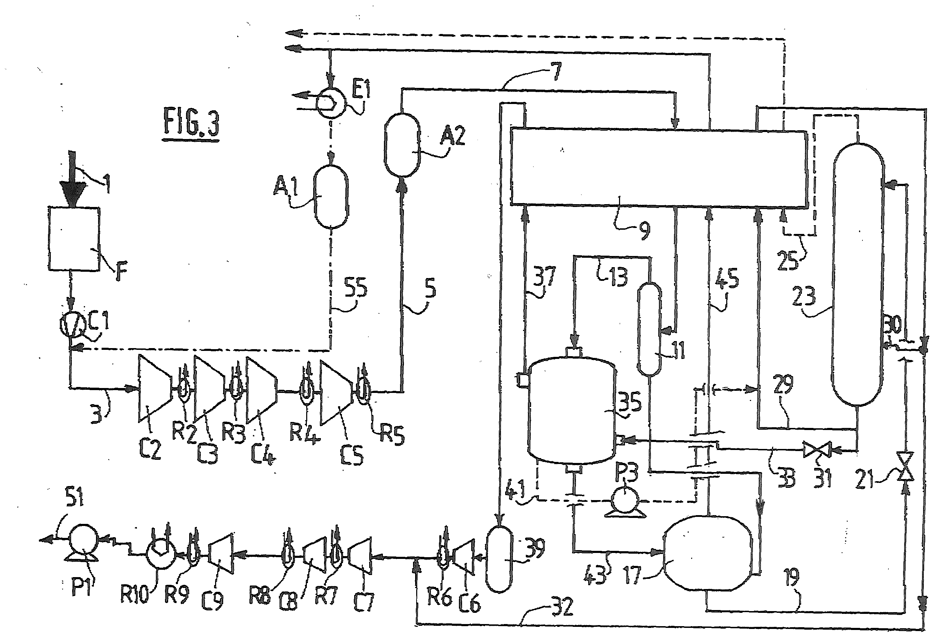

Dans la Figure 3, le liquide de purge 41 est pressurisé dans une pompe P3 jusqu'à une pression supérieure à laquelle le CO₂, produit par la ou les condensations partielles et/ou la distillation, est vaporisé. La purge 41 est alors mélangée avec ce CO₂ liquide 29 et elle se vaporise dans le flux à plus haute pression. Puisque cette vaporisation s'effectue dans l'échangeur principal en aluminium brasé 9, la purge peut se vaporiser intégralement et il n'y alors plus de perte frigorifique et on peut annuler le CO₂ recyclé 49 pour apporter des frigories des figures précédentes.

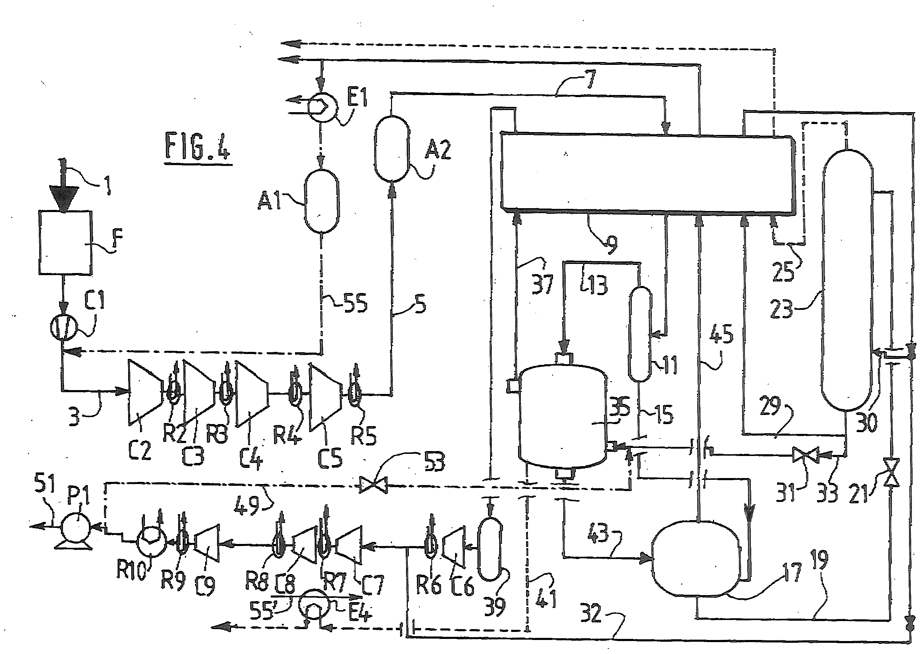

Dans la Figure 4, le débit de purge 41 est vaporisée à l'extérieur de la boite froide dans un échangeur E4 afin de produire de l'eau glacée 55'. Sinon, le débit 41 peut servir à pré-refroidir le gaz d'alimentation de la boite froide ou refroidir le CO₂ produit ou pour toute autre valorisation du froid contenu. Le gaz ainsi obtenu en vaporisant le liquide 41 peut alors être mis à l'air s'il contient des impuretés que l'on ne souhaite pas valoriser autrement, le gaz pourrait être traité pour réduire la teneur en impuretés (lavage, adsorption, lit catalytique, etc.). Sinon le gaz peut être recyclé à la chaudière ou à l'unité de désulfuration d'où vient le mélange 1 pour réduire la teneur en NOx ou autre teneur en impureté combustible (hydrocarbures, alcool, etc.) ou bien utilisé pour toute autre application (récupération des NOx contenus, des hydrocarbures, des alcools, etc.)

La pompe P2, P3 devra pouvoir faire face à des phases solides (CO₂ solide, cristallisation de N₂O₄ ou d'autres impuretés) car tous les éléments lourds devraient s'y concentrer.

Enfin, il faut noter que l'échangeur en aluminium brasé 9, bien que ne refroidissant le gaz d'alimentation que jusqu'à -40°C environ, concentre tous les fluides pouvant permettre de récupérer des frigories afin d'assurer ce premier refroidissement. Ainsi l'utilisation d'un échangeur à deux fluides 35 uniquement pour le bout froid ne nuit pas trop à la performance thermique de l'ensemble. Il conviendra d'arranger convenablement les passages dans l'échangeur afin d'éviter de trop grands écarts thermiques, notamment avec les fluides les plus froids, par exemple le CO₂ à basse pression vaporisé dans l'échangeur « tubes - calandre ». Le principe est de positionner les fluides gazeux froids sur les extrémités, uniquement en contact (indirectement bien sûr) avec le flux de CO₂ « HP » qui se vaporise. Ce dernier sera le seul fluide en contact (indirect) avec le fluide chaud qui se condense partiellement.

Ce point est d'autant plus important pour l'application où il faut éviter d'accumuler du mercure dans cet échangeur. Ainsi il faut éviter que le fluide chaud soit en contact avec des fluides plus froids que le point triple du mercure, soit - 38°C. En effet, il pourrait alors localement descendre sous les -38°C et déposer le mercure sous forme solide dans l'échangeur.

Dans toutes les figures, la colonne 23 peut être remplacée par une série de séparateurs de phases qui séparent le liquide 19 pour former un gaz 25 appauvri en dioxyde de carbone et un liquide 33 enrichi en dioxyde de carbone.

La colonne 23, l'échangeur 9, les séparateurs de phases 11, 17 et l'échangeur 35 sont contenus à l'intérieur d'une enceinte thermique comme ils opèrent à basse température.

Une autre variante va produire de l'eau glacée dans l'échangeur E10 ou toute autre valorisation envisageable de ce froid

Dans la Figure 3, le liquide de purge 41 est pressurisé dans une pompe P3 jusqu'à une pression supérieure à laquelle le CO₂, produit par la ou les condensations partielles et/ou la distillation, est vaporisé. La purge 41 est alors mélangée avec ce CO₂ liquide 29 et elle se vaporise dans le flux à plus haute pression. Puisque cette vaporisation s'effectue dans l'échangeur principal en aluminium brasé 9, la purge peut se vaporiser intégralement et il n'y alors plus de perte frigorifique et on peut annuler le CO₂ recyclé 49 pour apporter des frigories des figures précédentes.

Dans la Figure 4, le débit de purge 41 est vaporisée à l'extérieur de la boite froide dans un échangeur E4 afin de produire de l'eau glacée 55. Sinon, le débit 41 peut servir à pré-refroidir le gaz d'alimentation de la boite froide ou refroidir le CO₂ produit ou pour toute autre valorisation du froid contenu. Le gaz ainsi obtenu en vaporisant le liquide 41 peut alors être mis à l'air s'il contient des impuretés que l'on ne souhaite pas valoriser autrement, le gaz pourrait être traité pour réduire la teneur en impuretés (lavage, adsorption, lit catalytique, etc.). Sinon le gaz peut être recyclé à la chaudière ou à l'unité de désulfuration d'où vient le mélange 1 pour réduire la teneur en NOx ou autre teneur en impureté combustible (hydrocarbures, alcool, etc.) ou bien utilisé pour toute autre application (récupération des NOx contenus, des hydrocarbures, des alcools, etc.)

La pompe P2, P3 devra pouvoir faire face à des phases solides (CO₂ solide, cristallisation de N₂O₄ ou d'autres impuretés) car tous les éléments lourds devraient s'y concentrer.

Enfin, il faut noter que l'échangeur en aluminium brasé 9, bien que ne refroidissant le gaz d'alimentation que jusqu'à -40°C environ, concentre tous les fluides pouvant permettre de récupérer des frigories afin d'assurer ce premier refroidissement. Ainsi l'utilisation d'un échangeur à deux fluides 35 uniquement pour le bout froid ne nuit pas trop à la performance thermique de l'ensemble. Il conviendra d'arranger convenablement les passages dans l'échangeur afin d'éviter de trop grands écarts thermiques, notamment avec les fluides les plus froids, par exemple le CO₂ à basse pression vaporisé dans l'échangeur « tubes - calandre ». Le principe est de positionner les fluides gazeux froids sur les extrémités, uniquement en contact (indirectement bien sûr) avec le flux de CO₂ « HP » qui se vaporise. Ce dernier sera le seul fluide en contact (indirect) avec le fluide chaud qui se condense partiellement.

Ce point est d'autant plus important pour l'application où il faut éviter d'accumuler du mercure dans cet échangeur. Ainsi il faut éviter que le fluide chaud soit en contact avec des fluides plus froids que le point triple du mercure, soit - 38°C. En effet, il pourrait alors localement descendre sous les -38°C et déposer le mercure sous forme solide dans l'échangeur.

Dans toutes les figures, la colonne 23 peut être remplacée par une série de séparateurs de phases qui séparent le liquide 19 pour former un gaz 25 appauvri en dioxyde de carbone et un liquide 33 enrichi en dioxyde de carbone.

La colonne 23, l'échangeur 9, les séparateurs de phases 11, 17 et l'échangeur 35 sont contenus à l'intérieur d'une enceinte thermique comme ils opèrent à basse température.

## Revendications

1. Procédé de purification d'un mélange contenant du dioxyde de carbone à basse température pour produire un fluide riche en dioxyde de carbone dans lequel :
i) le mélange qui est riche en dioxyde de carbone est refroidi dans un premier échangeur de chaleur en plaques d'aluminium brasées (9), constitué de tapis d'ondes séparés par des plaques, et le mélange refroidi se condense au moins partiellement dans le premier échangeur (9) et est envoyé à un premier séparateur de phases (11),
ii) le mélange refroidi ou au moins un fluide (19) dérivé du mélange refroidi est envoyé à une étape de purification comprenant une étape de distillation et/ou au moins deux étapes successives de condensation partielle,
iii) l'étape de purification produit un gaz appauvri en dioxyde de carbone (25) qui se réchauffe dans le premier échangeur,
iv) l'étape de purification produit un liquide riche en dioxyde de carbone (33) qui est détendu puis envoyé à un deuxième échangeur de chaleur (35) où il est réchauffé, le gaz (13) du premier séparateur de phases est envoyé au deuxième échangeur pour réchauffer le liquide riche en dioxyde de carbone en se refroidissant et se condensant au moins partiellement dans le deuxième échangeur, le deuxième échangeur effectuant un échange de chaleur indirect entre le liquide riche en dioxyde de carbone et le gaz du premier séparateur de phases, et
v) le liquide riche en dioxyde de carbone se vaporise au moins partiellement dans le deuxième échangeur et le gaz vaporisé formé se réchauffe dans le premier échangeur pour former un gaz riche en dioxyde de carbone (37), pouvant être le produit final du procédé et dans lequel le deuxième échangeur de chaleur (35) est un échangeur à tubes et à calandre, **caractérisé en ce que** le deuxième échangeur effectue uniquement un échange de chaleur indirect entre le liquide riche en dioxyde de carbone qui se réchauffe dans la calandre et le gaz (13) du premier séparateur de phase qui réchauffe le liquide riche en dioxyde de carbone en se refroidissant dans les tubes.

2. Procédé selon la revendication 1 dans lequel le gaz riche en dioxyde de carbone (37) est comprimé et condensé pour former un liquide riche en dioxyde de carbone (51) qui est un produit final du procédé.

3. Procédé selon la revendication 1 ou 2 dans lequel le liquide du premier séparateur de phases (11) est détendu et envoyé à un deuxième séparateur de phases (17).

4. Procédé selon l'une des revendications précédentes dans lequel le liquide condensé (43) est envoyé à un (au) deuxième séparateur de phases (17).

5. Procédé selon l'une des revendications 3 et 4 dans lequel le liquide (19) du deuxième séparateur de phases est détendu et est envoyé en tête d'une colonne de distillation (23) où s'effectue la distillation, pour alimenter la colonne de distillation.

6. Procédé selon la revendication 3, 4 ou 5 dans lequel le gaz (45) di deuxième séparateur de phases (17) se réchauffe dans le premier échangeur (9).

7. Procédé selon l'une des revendications précédentes dans lequel le liquide du premier séparateur de phases (11) est détendu et envoyé en tete d'une colonne de distillation (23) où s'effectue la distillation, pour alimenter la colonne de distillation.

8. Procédé selon l'une des revendications précédentes dans lequel u, deuxième liquide (29) riche en dioxyde de carbone est produit par l'étape de purification et envoyé au premier échangeur (9) sans passer par le deuxième échangeur et de préférence sans avoir été détendu, ce deuxième liquide se vaporise dans le premier échangeur pour former un gaz riche en dioxyde de carbone (32).

9. Procédé selon l'une des revendications précédentes dans lequel un liquide de purge (41) du deuxième échangeur (35) est vaporisé pour fournir des frigories au procédé.

10. Procédé selon l'une des revendications précédentes dans lequel le liquide riche en dioxyde de carbone (33) est envoyé au deuxième échangeur (35) après détente à une pression correspondant à celle du point triple du dioxyde de carbone et à une température égale à son point triple.

11. Procédé selon l'une des revendications précédentes dans lequel la densité de la phase liquide riche en dioxyde de carbone utilisé dans le deuxième échangeur (35) pour refroidir le mélange gazeux riche en dioxyde de carbone est comprise entre 1171 kg/m³ et 1562 kg/m³.

12. Appareil de purification d'un mélange contenant du dioxyde de carbone à basse température pour produire un fluide riche en dioxyde de carbone comprenant un premier échangeur de chaleur (9) en plaques d'aluminium brasées, constitué de tapis d'ondes séparés par des plaques, un deuxième échangeur de chaleur (35) capable de permettre un échange de chaleur indirect entre seulement deux fluides, une unité de purification comprenant au moins une colonne de distillation (23) et/ou au moins deux séparateurs de phases reliés en série, une conduite pour envoyer le mélange qui est riche en dioxyde de carbone se refroidir dans le premier échangeur, une conduite pour envoyer le mélange refroidi ou au moins un fluide dérivé du mélange refroidi (13) à l'unité de purification, une conduite pour sortir de l'unité de purification un gaz appauvri en dioxyde de carbone (25) reliée au premier échangeur, une vanne (31) et une conduite pour sortir de l'unité de purification un liquide riche en dioxyde de carbone reliée (33) à la vanne, la vanne étant reliée au deuxième échangeur de chaleur et une conduite pour envoyer le gaz (37) produit par la vaporisation du liquide riche en dioxyde de carbone dans le deuxième échangeur au premier échangeur pour se réchauffer, un premier séparateur de phases (11), des moyens pour envoyer le mélange refroidi du premier échangeur au premier séparateur de phases et des moyens (13) pour envoyer un gaz du premier séparateur de phases au deuxième échangeur comme fluide du procédé qui chauffe et vaporise le liquide riche en dioxyde de carbone dans le deuxième échangeur (35), le deuxième échangeur (35) est un échangeur à tubes et à calandre **caractérisé en ce que** l'appareil comprend des moyens pour envoyer le liquide riche en dioxyde de carbone se réchauffer dans la calandre du deuxième échangeur (35) et des moyens pour envoyer le fluide du procédé se refroidir dans les tubes du deuxième échangeur (35).

13. Appareil selon la revendication 12 comprenant des moyens pour envoyer un liquide du premier et/ou d'un deuxième séparateur de phases (11,17) à la colonne de distillation (23).

## Patentansprüche

1. Verfahren zur Reinigung eines Kohlendioxid enthaltenden Gemisches bei niedriger Temperatur, um ein kohlendioxidreiches Fluid zu erzeugen, wobei:
i) das kohlendioxidreiche Gemisch in einem ersten Wärmeaustauscher aus gelöteten Aluminiumplatten (9) gekühlt wird, der aus durch Platten getrennte Wellenmatten besteht, und wobei das gekühlte Gemisch mindestens teilweise in dem ersten Austauscher (9) kondensiert wird und zu dem ersten Phasentrenner (11) geleitet wird,
ii) das gekühlte Gemisch oder mindestens ein Fluid (19), das von dem gekühlten Gemisch abgeleitet ist, zu einem Reinigungsschritt geleitet wird, der einen Schritt der Destillation und/oder mindestens zwei aufeinanderfolgende Schritte der teilweisen Kondensation umfasst,
iii) der Reinigungsschritt ein an Kohlendioxid verarmtes Gas (25) erzeugt, das in dem ersten Austauscher erhitzt wird,
iv) der Reinigungsschritt eine kohlendioxidreiche Flüssigkeit (33) erzeugt, welche expandiert und dann zu einem zweiten Wärmeaustauscher (35) geleitet wird, wo sie erhitzt wird, wobei das Gas (13) des ersten Phasentrenners zu dem zweiten Austauscher geleitet wird, um die kohlendioxidreiche Flüssigkeit zu erhitzen, wobei sie mindestens teilweise in dem zweiten Austauscher gekühlt und kondensiert wird, wobei der zweite Austauscher einen indirekten Wärmeaustausch zwischen der kohlendioxidreichen Flüssigkeit und dem Gas des ersten Phasentrenners durchführt, und
v) die kohlendioxidreiche Flüssigkeit in dem zweiten Austauscher zumindest teilweise verdampft, und das gebildete verdampfte Gas in dem ersten Austauscher erhitzt wird, um ein kohlendioxidreiches Gas (37) zu bilden, das das Endprodukt des Verfahrens sein kann, und wobei der zweite Wärmeaustauscher (35) ein Austauscher mit Rohren und Kalander ist, **dadurch gekennzeichnet, dass** der zweite Austauscher nur einen indirekten Wärmeaustausch zwischen der kohlendioxidreichen Flüssigkeit, die in dem Kalander erhitzt wird, und dem Gas (13) des ersten Phasentrenners durchführt, der die kohlendioxidreiche Flüssigkeit erhitzt, indem es sich in den Rohren abkühlt.

2. Verfahren nach Anspruch 1, wobei das kohlendioxidreiche Gas (37) komprimiert und kondensiert wird, um eine kohlendioxidreiche Flüssigkeit (51) zu bilden, die ein Endprodukt des Verfahrens ist.

3. Verfahren nach Anspruch 1 oder 2, wobei die Flüssigkeit des ersten Phasentrenners (11) expandiert und zu einem zweiten Phasentrenner (17) geleitet wird.

4. Verfahren nach einem der vorstehenden Ansprüche, wobei die kondensierte Flüssigkeit (43) zu einem (dem) zweiten Phasentrenner (17) geleitet wird.

5. Verfahren nach einem der Ansprüche 3 und 4, wobei die Flüssigkeit (19) des zweiten Phasentrenners expandiert und zu dem Kopf einer Destillationskolonne (23), wo die Destillation durchgeführt wird, geleitet wird, um die Destillationskolonne zu versorgen.

6. Verfahren nach Anspruch 3, 4 oder 5, wobei sich das Gas (45) des zweiten Phasentrenners (17) in dem ersten Austauscher (9) erhitzt.

7. Verfahren nach einem der vorstehenden Ansprüche, wobei die Flüssigkeit des ersten Phasentrenners (11) expandiert und zu dem Kopf einer Destillationskolonne (23), in der die Destillation durchgeführt wird, geleitet wird, um die Destillationskolonne zu versorgen.

8. Verfahren nach einem der vorstehenden Ansprüche, wobei durch den Reinigungsschritt eine zweite kohlendioxidreiche Flüssigkeit (29) erzeugt, und zu dem ersten Austauscher (9) geleitet wird, ohne den zweiten Austauscher zu durchlaufen und vorzugsweise ohne expandiert worden zu sein, wobei diese zweite Flüssigkeit in dem ersten Austauscher verdampft, um ein kohlendioxidreiches Gas (32) zu bilden.

9. Verfahren nach einem der vorstehenden Ansprüche, wobei eine Spülflüssigkeit (41) des zweiten Austauschers (35) verdampft, um dem Verfahren Kälte zuzuführen.

10. Verfahren nach einem der vorstehenden Ansprüche, wobei die kohlendioxidreiche Flüssigkeit (33) nach Expansion auf einen Druck, der demjenigen des Tripelpunkts des Kohlendioxids entspricht, und auf eine Temperatur, die gleich derjenigen des Tripelpunkts ist, zu dem zweiten Austauscher (35) geleitet wird.

11. Verfahren nach einem der vorstehenden Ansprüche, wobei die Dichte der kohlendioxidreichen flüssigen Phase, die in dem zweiten Austauscher (35) zum Kühlen des kohlendioxidreichen Gasgemisches verwendet wird, zwischen 1171 kg/m³ und 1562 kg/m³ liegt.

12. Einrichtung zur Reinigung eines Kohlendioxid enthaltenden Gemisches bei niedriger Temperatur, um ein kohlendioxidreiches Fluid zu erzeugen, umfassend einen ersten Wärmeaustauscher (9) aus gelöteten Aluminiumplatten, der aus durch Platten getrennte Wellenmatten besteht, einen zweiten Wärmeaustauscher (35), der imstande ist, einen indirekten Wärmeaustausch zwischen nur zwei Fluiden zu ermöglichen, eine Reinigungseinheit, die mindestens eine Destillationskolonne (23) und/oder mindestens zwei in Reihe verbundene Phasentrenner umfasst, eine Leitung, um das kohlendioxidreiche Gemisch zum Kühlen in den ersten Austauscher zu leiten, eine Leitung, um das gekühlte Gemisch oder das mindestens eine Fluid, das von dem gekühlten Gemisch (13) abgeleitet ist, zu der Reinigungseinheit zu leiten, eine Leitung, um ein an Kohlendioxid (25) verarmtes Gas aus der Reinigungseinheit auszulassen, die mit dem ersten Austauscher, einem Ventil (31) und einer Leitung verbunden ist, um eine kohlendioxidreiche Flüssigkeit (33) aus der Reinigungseinheit auszulassen, die mit dem Ventil verbunden ist, wobei das Ventil mit dem zweiten Wärmeaustauscher und einer Leitung verbunden ist, um das Gas (37), das durch die Verdampfung der kohlendioxidreichen Flüssigkeit in dem zweiten Austauscher erzeugt wird, zu dem ersten Austauscher zu leiten, um erhitzt zu werden, einen ersten Phasentrenner (11), Mittel, um das gekühlte Gemisch von dem ersten Austauscher zu dem ersten Phasentrenner zu leiten, und Mittel (13), um ein Gas von dem ersten Phasentrenner zu dem zweiten Austauscher als Fluid des Verfahrens, das die kohlendioxidreiche Flüssigkeit in dem zweiten Austauscher (35) erhitzt und verdampft, zu leiten, wobei der zweite Austauscher (35) ein Austauscher mit Rohren und Kalander ist, **dadurch gekennzeichnet, dass** die Einrichtung Mittel, um die kohlendioxidreiche Flüssigkeit zum Erhitzen in dem Kalander des zweiten Austauschers (35) zu leiten, und Mittel umfasst, um das Fluid des Verfahrens zum Kühlen in den Rohren des zweiten Austauschers (35) zu leiten.

13. Einrichtung nach Anspruch 12, umfassend Mittel, um eine Flüssigkeit von dem ersten und/oder zweiten Phasentrenner (11, 17) zu der Destillationskolonne (23) zu leiten.

## Claims

1. Method for purifying a mixture containing carbon dioxide at a low temperature to produce a carbon-dioxide rich fluid, wherein:
i) the carbon-dioxide rich mixture is cooled in a first brazed aluminium plate-fin heat exchanger (9), consisting of wave mats separated by plates, and the cooled mixture condenses at least partially in the first exchanger (9) and is sent to a first phase separator (11),
ii) the cooled mixture or at least one fluid (19) derived from the cooled mixture is sent to a purification step comprising a distillation step and/or at least two successive partial condensation steps,
iii) the purification step produces a carbon dioxide-depleted gas (25) which heats up again the first exchanger,
iv) the purification step produces a carbon-dioxide rich liquid (33) which is expanded, then sent to a second heat exchanger (35) where it is heated, the gas (13) of the first phase separator is sent to the second exchanger to heat the carbon-dioxide rich liquid by cooling and condensing at least partially in the second exchanger, the second exchanger carrying out an indirect heat exchange between the carbon-dioxide rich liquid and the gas of the first phase separator, and
v) the carbon-dioxide rich liquid vaporises at least partially in the second exchanger and the vaporised gas formed is heated in the first exchanger in order to form a carbon-dioxide rich gas (37), that can be the end product of the method and wherein the second heat exchanger (35) is a shell and tube exchanger, **characterised in that** the second exchanger carries out only an indirect heat exchange between the carbon-dioxide rich liquid which is heated in the shell and the gas (13) of the first phase separator which heats the carbon-dioxide rich liquid by cooling in the tubes.

2. Method according to claim 1, wherein the carbon-dioxide rich gas (37) is compressed and condensed to form a carbon-dioxide rich liquid (51) which is an end product of the method.

3. Method according to claim 1 or 2, wherein the liquid of the first phase separator (11) is expanded and sent to a second phase separator (17).

4. Method according to one of the preceding claims, wherein the condensed liquid (43) is sent to a (to the) second phase separator (17).

5. Method according to one of claims 3 and 4, wherein the liquid (19) of the second phase separator is expanded and is sent to the top of a distillation column (23) where the distillation is carried out, to supply the distillation column.

6. Method according to claim 3, 4 or 5, wherein the gas (45) of the second phase separator (17) is heated in the first exchanger (9).

7. Method according to one of the preceding claims, wherein the liquid of the first phase separator (11) is expanded and sent to the top of a distillation column (23) where the distillation is carried out, to supply the distillation column.

8. Method according to one of the preceding claims, wherein a second carbon-dioxide rich liquid (29) is produced by the purification step and sent to the first exchanger (9) without passing through the second exchanger and preferably without having been expanded, this second liquid vaporises in the first exchanger to form a carbon-dioxide rich gas (32).

9. Method according to one of the preceding claims, wherein a purge liquid (41) of the second exchanger (35) is vaporised to supply frigories to the method.

10. Method according to one of the preceding claims, wherein the carbon-dioxide rich liquid (33) is sent to the second exchanger (35) after expansion at a pressure corresponding to that of the carbon dioxide triple point and at a temperature equal to the triple point thereof.

11. Method according to one of the preceding claims, wherein the density of the liquid phase rich in carbon dioxide used in the second exchanger (35) to cool the gas mixture rich in carbon dioxide is of between 1171kg/m³ and 1562kg/m³.

12. Apparatus for purifying a mixture containing carbon dioxide at a low temperature to produce a carbon-dioxide rich fluid comprising a first brazed aluminium plate-fin heat exchanger (9), consisting of wave mats separated by plates, a second exchanger (35) capable of making it possible for an indirect heat exchange between only two fluids, a purification unit comprising at least one distillation column (23) and/or at least two phase separators connected in series, a duct for sending the carbon-dioxide rich mixture to cool in the first exchanger, a duct for sending the cooled mixture or at least one fluid derived from the cooled mixture (13) to the purification unit, a duct for exiting from the purification unit a carbon dioxide-depleted gas (25) connected to the first exchanger, a valve (31) and a duct for exiting from the purification unit a carbon-dioxide rich liquid connected (33) to the valve, with the valve being connected to the second heat exchanger and a duct for sending the gas (37) produced by the vaporisation of the carbon-dioxide rich liquid in the second exchanger to the first exchanger to be heated, a first phase separator (11), means for sending the cooled mixture from the first exchanger to the first phase separator and means (13) for sending a gas from the first phase separator to the second exchanger as a fluid from the method that heats and vaporises the carbon-dioxide rich liquid in the second exchanger (35), the second exchanger (35) is a shell and tube exchanger, **characterised in that** the apparatus comprises means for sending the carbon-dioxide rich liquid to be heated in the shell of the second exchanger (35) and means for sending the fluid from the method to cool in the tubes of the second exchanger (35).

13. Apparatus according to claim 12 comprising means for sending a liquid from the first and/or from a second phase separator to the distillation column (23).
